# EUROPEAN PATENT APPLICATION

(11) **EP 2 769 864 A1**
(43) Date of publication of application: **27.08.2014**
(21) Application number: 13155532.8
(22) Date of filing: 15.02.2013
(51) Int. Cl.: B60K 5/00, B60K 5/04

(54) **Racing engine for kart or the like**

(71) Applicant: Robby Moto Engineering S.r.l., 26041 Casalmaggiore (CR) (IT)
(72) Inventor: Papetti, Roberto, 26041 Casalmaggiore (CR) (IT)
(74) Representative: Brunacci, Marco

(57) **Abstract**

The racing engine (1) for kart or the like comprises an engine body (2) and attachment means (3) for attaching the engine body (2) to a chassis (B) of a kart (A) or of a similar vehicle, wherein the engine body (2) extends from the attachment means (3) along a direction of extension (D) and with an angle of inclination (α) between 0° and 30° with respect to a horizontal plane (O).

## Description

The present invention relates to a racing engine for kart or the like.

With reference to car racing, karting is known to be the sport which uses specific four-wheeled vehicles with a tubular steel chassis, without suspensions and with an internal combustion engine.

The engine is generally a small displacement one (a 50 cc to 125 cc two-stroke engine or a 100cc to 250 cc four-stroke engine) with drive transmission to a rear rigid axle devoid of differential.

Normally, the engine is fixed to the chassis in correspondence to the rear portion of the kart and alongside the driver's seat.

Nevertheless, the positioning of the engine, together with the shape and overall dimensions of the engine itself, do have a number of drawbacks.

In particular, the engine is generally a vertical two-stroke one with overall dimensions extending mainly in height (as well as in width and in length).

This inevitably causes discomfort for the driver who is hindered by the engine during normal driving operations and is consequently forced to take up uncomfortable and forced postures while driving.

Furthermore, the vertical forces and vibrations caused by the engine are discharged along a vertical direction.

This therefore causes further discomfort for the driver who suffers from these vibrations while driving.

Not the least drawback is provided by the fact that the positioning and the overall dimensions of the engine considerably affect the balance of the vehicle, raising its centre of gravity and thus affecting the overall performance of the vehicle itself.

The main object of the present invention is to provide a racing engine for kart or the like which does not hinder the driver during normal driving operations and, consequently, does not force the driver to take up uncomfortable and forced postures while driving.

Another object of the present invention is to provide a racing engine for kart or the like which allows reducing the vertical forces and the vibrations discharged on the vehicle chassis in a vertical direction.

Another object of the present invention is to provide a racing engine for kart or the like which allows improving the normal vehicle balance and, therefore, the overall performance of the vehicle itself.

Another object of the present invention is to provide a racing engine for kart or the like which allows improving vehicle aerodynamics and, therefore, the overall performance of the vehicle itself.

Another object of the present invention is to provide a racing engine for kart or the like which allows to overcome the mentioned drawbacks of the state of the art in the ambit of a simple, rational, easy and effective to use as well as low cost solution.

The above objects are achieved by the present racing engine for kart or the like, comprising an engine body and attachment means for attaching said engine body to a chassis of a kart or of a similar vehicle, **characterized in that** said engine body extends from said attachment means along a direction of extension and with an angle of inclination between 0° and 30° with respect to a horizontal plane.

Other characteristics and advantages of the present invention will become more evident from the description of a preferred, but not sole, embodiment of a racing engine for kart or the like, illustrated purely as an example but not limited to the annexed drawings in which:
Figure 1 is a side view which schematically shows the use and position of the engine according to the invention on a kart;
Figure 2 is a side section view of the engine according to the invention;
Figure 3 and Figure 4 are perspective views of the engine according to the invention.

With particular reference to such figures, globally indicated by 1 is a combustion engine installable on a racing kart A of traditional type.

In particular, according to a preferred embodiment shown in the illustrations, the engine 1 is made up of an engine of the four-stroke type.

The engine 1 comprises an engine body, generally indicated in the illustrations by the reference 2, having attachment means 3 fixable to the chassis B of a kart A.

The attachment means 3 can be composed of common threaded coupling elements usable to fix a generic combustion engine of known type to the chassis B of the kart A.

Advantageously, the engine body 2 extends from the attachment means 3 along a direction of extension D and with a predefined angle of inclination α with respect to a horizontal plane O.

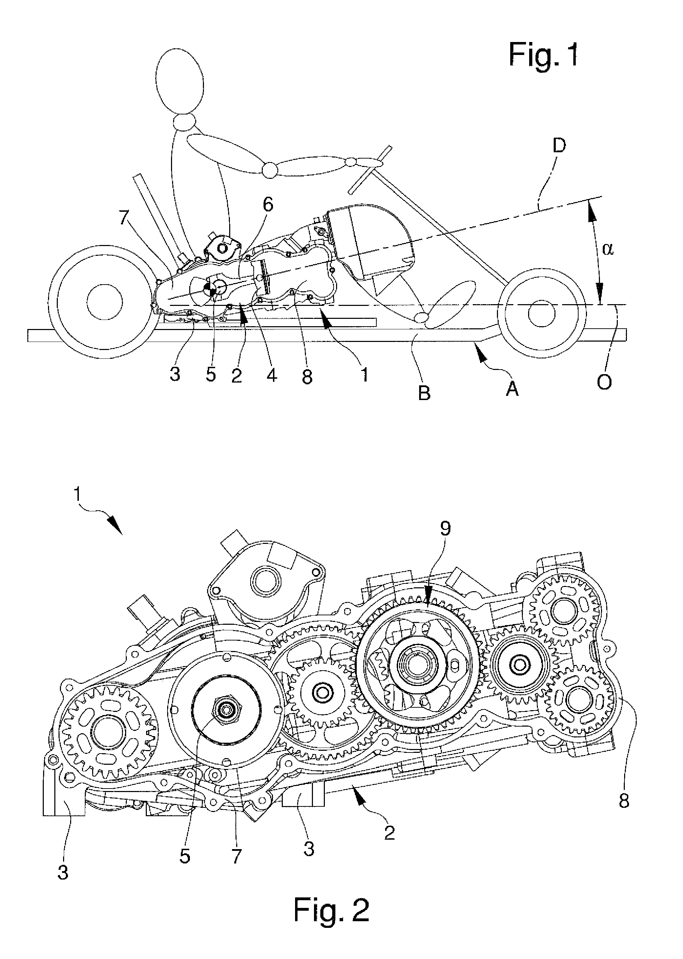

It must be pointed out that in the present description, as clearly shown in figure 1, the horizontal plane O and the relative angle of inclination α are determined considering the normal positioning of the engine 1 when installed on the chassis B of a kart A.

Advantageously, the angle of inclination α is between 0° and 30°.

Preferably, such angle of inclination α is substantially horizontal or, in any case, equal to an angle of around 11°.

This permits considerably reducing the overall vertical dimensions of the engine 1, and thereby avoiding the common problems of hindrance to driving for the driver caused by the use of vertically-extending engines of known type.

In fact, as schematically shown in figure 1, the attachment means 3 are fixed to a corresponding fastening on the chassis B substantially in correspondence to a rear portion of the chassis itself, and the engine 1 extends along the direction of extension D in the proximity and along one side of the seat C of the kart A.

As schematized in figure 1, the engine 1 further comprises at least a piston 4 housed sliding inside the engine body 2 and mobile, during normal engine operation, along a direction substantially parallel to the direction of extension D.

Consequently, the vibrations caused by the operation of the piston 4 are not discharged along a vertical direction, but are discharged mostly on the chassis B along the direction of extension D substantially horizontal, thus in fact reducing the discomfort for the driver who normally suffers from the effects of such vibrations while driving.

The engine 1 further comprises an engine shaft 5 and a connecting rod-crank system 6 operatively connected to the piston 4 and to the engine shaft 5.

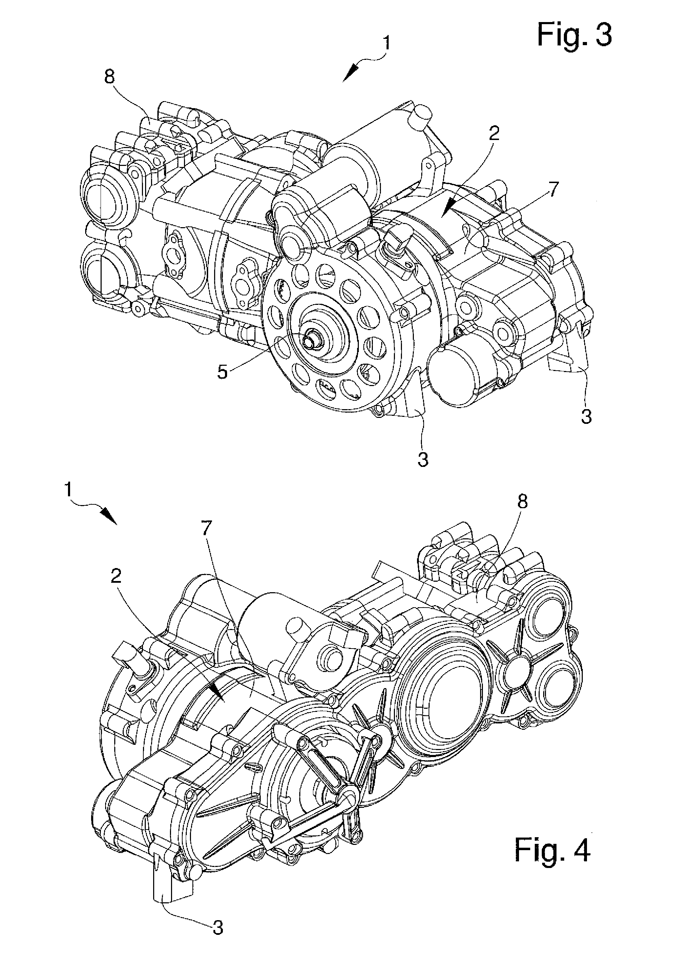

With reference to the particular embodiment of the engine 1 shown in the figures 2, 3 and 4, the engine body 2 comprises an engine block 7, inside which is obtained a sliding housing cylinder of the piston 4, and a head 8, associated with the engine block 7 for closing the cylinder itself.

Preferably, the engine 1 being preferably made up of a four-stroke engine, the head 8 has at least one intake valve and at least one exhaust valve, not shown in the figures.

Usefully, the engine block 7 has a substantially elongated shape and has one extremity having attachment means 3 and one opposite extremity having the head 8.

Usefully, as shown in figure 2, the engine 1 comprises a series of timing gears, generally indicated by the reference 9.

It has in fact been ascertained how the described invention achieves the proposed objects.

In particular, the fact is underlined that the particular layout and substantially horizontal inclination of the engine are such as not to hinder the driver during normal driving operations and, consequently, not to force the driver to take up uncomfortable and forced postures while driving.

Furthermore, the horizontal forces and the vibrations caused by the engine are discharged in a horizontal direction and are not therefore felt by the driver, with consequent improvement of the driving comfort of the driver him/herself.

A further advantage derives from the fact that the use of the engine according to the invention permits improving normal vehicle balance, inasmuch as it leads to a lowering of the position of the centre of gravity with respect to classic configurations which use engines of known type.

Furthermore, the vehicle aerodynamics also benefit, inasmuch as the very low position of the engine permits having less front surface and, therefore, less aerodynamic resistance.

Furthermore, the use of an engine of the four-stroke type rather than a two-stroke engine results in the invention complying with recent anti-pollution laws.

## Claims

1. A racing engine (1) for kart or the like, comprising an engine body (2) and attachment means (3) for attaching said engine body (2) to a chassis (B) of a kart (A) or of a similar vehicle, **characterized in that** said engine body (2) extends from said attachment means (3) along a direction of extension (D) and with an angle of inclination (α) between 0° and 30° with respect to a horizontal plane (O).

2. Engine (1) according to claim 1, **characterized in that** said direction of extension (D) is substantially horizontal.

3. Engine (1) according to any of the preceding claims, **characterized in that** said angle of inclination (α) is equal to 11°.

4. Engine (1) according to any of the preceding claims, **characterized in that** it comprises at least a piston (4) housed sliding inside said engine body (2) and mobile along a direction substantially parallel to said direction of extension (D).

5. Engine (1) according to any of the preceding claims, **characterized in that** it is of a four-stroke engine type.

6. Engine (1) according to any of the preceding claims, **characterized in that** said engine body (2) comprises at least an engine block (7) having at least a cylinder, said piston (4) being fitted sliding inside said cylinder.

7. Engine (1) according to any of the preceding claims, **characterized in that** said engine body (2) comprises at least a head (8) associated with said engine block (7) for closing said cylinder and having at least one intake valve and one exhaust valve.

8. Engine (1) according to any of the preceding claims, **characterized in that** said engine block (7) has a substantially elongated shape and has one extremity having attachment means (3) and one opposite extremity having said head (8).

9. Engine (1) according to any of the preceding claims, **characterized in that** it comprises a series of timing gears (9).

10. Kart (A) comprising at least a carrying chassis (B) having at least four wheels and at least a seat supported by said chassis (B), **characterized in that** it comprises the engine (1) according to any of the preceding claims, wherein said attachment means (3) are fixed to a corresponding fastening in correspondence to a substantially rear portion of said chassis (B) and wherein said engine (1) extends along said direction of extension (D) in the proximity of one side of said seat.
